# EUROPEAN PATENT APPLICATION

(11) **EP 4 506 815 A1**
(43) Date of publication of application: **12.02.2025**
(21) Application number: 22936613.3
(22) Date of filing: 08.04.2022
(51) Int. Cl.: G06F 9/455, G06F 9/451, B60K 35/00

(54) **SIGNAL PROCESSING DEVICE AND VEHICLE DISPLAY DEVICE INCLUDING SAME**

(71) Applicant: LG Electronics Inc., Yeongdeungpo-gu Seoul 07336 (KR)
(72) Inventor: PARK, Suho, Seoul 06772 (KR); KIM, Minhyoung, Seoul 06772 (KR)
(74) Representative: Vossius & Partner Patentanwälte Rechtsanwälte mbB
(86) International application number: PCT/KR2022/005098
(87) International publication number: WO 2023/195559

(57) **Abstract**

A signal processing device and a display apparatus for vehicles including the same are disclosed. The signal processing device comprises a processor configured to perform signal processing for a display mounted in a vehicle, wherein the processor is configured to execute a plurality of virtual machines on a hypervisor in the processor, and the hypervisor in the processor is configured to monitor resource usage information of the plurality of virtual machines and execute allocation or reallocation of resources of the plurality of virtual machines. Accordingly, the resource usage information of the plurality of virtual machines may be monitored and efficiently utilized in the hypervisor.

## Description

### BACKGROUND

### 1. Field

The present disclosure relates to a signal processing device and a display apparatus for vehicles including the same, and more particularly to a signal processing device capable of monitoring and efficiently utilizing resource usage information of a plurality of virtual machines in a hypervisor and a display apparatus for vehicles including the same.

### 2. Description of the Related Art

A vehicle is an apparatus that a driver moves in a desired direction. A representative example of the vehicle is a car.

Meanwhile, a display apparatus for vehicles is located in the vehicle for convenience of users who use the vehicle.

For example, a display is disposed in a cluster in order to display various kinds of information. Meanwhile, in order to display vehicle driving information, various displays, such as an audio video navigation (AVN) display, are located in the vehicle, in addition to the cluster.

Meanwhile, Korean Registered Patent No. 10-1072807 (hereinafter referred to as the "prior art document") discloses a virtual machine monitor system.

In the virtual machine monitor system according to the prior art document, memory is allocated to a virtual machine that requires memory under a plurality of guest operating systems.

According to the prior art document, however, memory is divided into a sequential pattern and a non-sequential pattern to allocate memory, whereby load balancing for a processor core in a signal processing device cannot be performed.

### SUMMARY

An object of the present disclosure is to provide a signal processing device capable of monitoring and efficiently utilizing resource usage information of a plurality of virtual machines in a hypervisor and a display apparatus for vehicles including the same.

Another object of the present disclosure is to provide a signal processing device capable of efficiently utilizing a plurality of processor cores and a display apparatus for vehicles including the same.

A further object of the present disclosure is to provide a signal processing device capable of efficiently utilizing a processor core, non-volatile memory, volatile memory, a network, or an input/output interface and a display apparatus for vehicles including the same.

In accordance with an aspect of the present disclosure, the above and other objects can be accomplished by the provision of a signal processing device including a processor configured to perform signal processing for a display mounted in a vehicle, wherein the processor is configured to execute a plurality of virtual machines on a hypervisor in the processor, and the hypervisor in the processor is configured to monitor resource usage information of the plurality of virtual machines and execute allocation or reallocation of resources of the plurality of virtual machines.

The hypervisor in the processor may be configured to monitor the resource usage information of the plurality of virtual machines and execute allocation or reallocation of the resources of the plurality of virtual machines based on a resource management request of a first virtual machine, among the plurality of virtual machines.

The hypervisor in the processor may be configured to monitor resource usage information of a guest virtual machine, among the plurality of virtual machines, and execute reallocation or resetting of the resources of the plurality of virtual machines based on the resource management request of the first virtual machine, among the plurality of virtual machines.

Among the plurality of virtual machines, a second virtual machine, may be operated for a first display and a third virtual machine may be operated for a second display, and the hypervisor in the processor may be configured to monitor resource usage information of the second virtual machine and the third virtual machine and execute reallocation or resetting of the resources of the plurality of virtual machines based on the resource management request of the first virtual machine.

The resource usage information of each virtual machine collected by the hypervisor may be transmitted to the first virtual machine, among the plurality of virtual machines.

The resource usage information may comprise at least one of the use ratio of a processor core in the signal processing device, the use ratio of a non-volatile memory, the use ratio of a volatile memory, the use ratio of a network, or the use ratio of an input/output interface.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control a virtual machine in which a use ratio of the dedicated processor core is not overloaded, among the plurality of virtual machines, not to use the shared processor core.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control a virtual machine in which the use ratio of the dedicated processor core is overloaded, among the plurality of virtual machines, to exclusively use the shared processor core or increase the use ratio of the shared processor core in the state in which some of the plurality of virtual machines do not use the shared processor core.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control the second virtual machine and the third virtual machine in which the use ratio of the dedicated processor core is not overloaded, among the plurality of virtual machines, not to use the shared processor core.

The hypervisor may be configured to control only a fourth virtual machine in which the use ratio of the dedicated processor core is overloaded, among the plurality of virtual machines, to use the shared processor core.

The signal processing device may further comprise a plurality of processor cores, wherein the plurality of processor cores may be divided into shared processor cores shared by the plurality of virtual machines and dedicated processor cores for each of the plurality of virtual machines, and the hypervisor may be configured to convert some of the dedicated processor cores to shared processor cores or convert some of the shared processor cores to dedicated processor cores based on the use ratio of the dedicated processor cores or the shared processor cores.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to perform load balancing in the case in which the use ratio of the dedicated processor core of each of the plurality of virtual machines is overloaded and terminate load balancing in the case in which the overload is resolved.

The signal processing device may further comprise a plurality of processor cores, wherein the hypervisor may be configured to determine the idle time of each of the processor cores of the plurality of virtual machines and allocate a required number of dedicated processor cores and shared processor cores to the plurality of virtual machines based on the idle time.

The hypervisor may be configured to control use of the shared processor cores to be turned off in order of decreasing use ratio of the dedicated processor cores of each of the plurality of virtual machines.

The first virtual machine, among the plurality of virtual machines, may comprise a resource monitor configured to monitor resource usage information, and the hypervisor in the processor may comprise a load balancing manager configured to control load balancing for the processor cores of the plurality of virtual machines and a resource provider configured to execute allocation or reallocation of resources of the plurality of virtual machines.

The first virtual machine in the processor may be configured to execute a camera manager configured to control the transmission of camera data, a position information manager configured to control the transmission of position information data, and an input manager configured to control the transmission of touch input data.

The first virtual machine in the processor may be configured to set up a shared memory based on the hypervisor for each of the camera manager, the position information manager, and the input manager.

The first virtual machine in the processor may be configured to execute a camera manager configured to control the transmission of camera data, a position information manager configured to control the transmission of position information data, and an input manager configured to control the transmission of touch input data. Consequently, various kinds of external data may be efficiently shared.

The first virtual machine in the processor may be configured to set up a shared memory based on the hypervisor for each of the camera manager, the position information manager, and the input manager. Accordingly, data for each manager may be shared using each shared memory.

In accordance with another aspect of the present disclosure, there is provided a display apparatus for vehicles, the display apparatus including a first display and a second display disposed in a vehicle and a signal processing device including a processor configured to perform signal processing for the first display and the second display, wherein the signal processing device comprises a processor configured to perform signal processing for a display mounted in a vehicle, the processor is configured to execute a plurality of virtual machines on a hypervisor in the processor, and the hypervisor in the processor is configured to monitor resource usage information of the plurality of virtual machines and execute allocation or reallocation of resources of the plurality of virtual machines.

The signal processing device may be configured to display a second image on the second display while a first image is displayed on the first display based on resource monitoring and load balancing.

### EFFECTS OF THE DISCLOSURE

A signal processing device according to an embodiment of the present disclosure comprises a processor configured to perform signal processing for a display mounted in a vehicle, wherein the processor is configured to execute a plurality of virtual machines on a hypervisor in the processor, and the hypervisor in the processor is configured to monitor resource usage information of the plurality of virtual machines and execute allocation or reallocation of resources of the plurality of virtual machines. Accordingly, the resource usage information of the plurality of virtual machines may be monitored and efficiently utilized in the hypervisor.

The hypervisor in the processor may be configured to monitor the resource usage information of the plurality of virtual machines and execute allocation or reallocation of the resources of the plurality of virtual machines based on a resource management request of a first virtual machine, among the plurality of virtual machines. Accordingly, the resource usage information of the plurality of virtual machines may be monitored and efficiently utilized in the hypervisor.

The hypervisor in the processor may be configured to monitor resource usage information of a guest virtual machine, among the plurality of virtual machines, and execute reallocation or resetting of the resources of the plurality of virtual machines based on the resource management request of the first virtual machine, among the plurality of virtual machines. Accordingly, the resource usage information of the plurality of virtual machines may be monitored and efficiently utilized in the hypervisor.

Among the plurality of virtual machines, a second virtual machine, may be operated for a first display and a third virtual machine may be operated for a second display, and the hypervisor in the processor may be configured to monitor resource usage information of the second virtual machine and the third virtual machine and execute reallocation or resetting of the resources of the plurality of virtual machines based on the resource management request of the first virtual machine. Accordingly, the resource usage information of the plurality of virtual machines may be monitored and efficiently utilized in the hypervisor.

The resource usage information of each virtual machine collected by the hypervisor may be transmitted to the first virtual machine, among the plurality of virtual machines. Accordingly, the first virtual machine may collect the resource usage information.

The resource usage information may comprise at least one of the use ratio of a processor core in the signal processing device, the use ratio of a non-volatile memory, the use ratio of a volatile memory, the use ratio of a network, or the use ratio of an input/output interface. Accordingly, the processor core, the non-volatile memory, the volatile memory, the network, or the input/output interface in the signal processing device may be efficiently utilized.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control a virtual machine in which a use ratio of the dedicated processor core is not overloaded, among the plurality of virtual machines, not to use the shared processor core. Accordingly, the plurality of processor cores in the signal processing device may be efficiently utilized.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control a virtual machine in which the use ratio of the dedicated processor core is overloaded, among the plurality of virtual machines, to exclusively use the shared processor core or increase the use ratio of the shared processor core in the state in which some of the plurality of virtual machines do not use the shared processor core. Accordingly, the plurality of processor cores in the signal processing device may be efficiently utilized.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to control the second virtual machine and the third virtual machine in which the use ratio of the dedicated processor core is not overloaded, among the plurality of virtual machines, not to use the shared processor core. Accordingly, the plurality of processor cores in the signal processing device may be efficiently utilized.

The hypervisor may be configured to control only a fourth virtual machine in which the use ratio of the dedicated processor core is overloaded, among the plurality of virtual machines, to use the shared processor core. Accordingly, the plurality of processor cores in the signal processing device may be efficiently utilized.

The signal processing device may further comprise a plurality of processor cores, wherein the plurality of processor cores may be divided into shared processor cores shared by the plurality of virtual machines and dedicated processor cores for each of the plurality of virtual machines, and the hypervisor may be configured to convert some of the dedicated processor cores to shared processor cores or convert some of the shared processor cores to dedicated processor cores based on the use ratio of the dedicated processor cores or the shared processor cores.

The signal processing device may further comprise a plurality of processor cores, wherein the plurality of processor cores may be divided into a shared processor core shared by the plurality of virtual machines and a dedicated processor core for each of the plurality of virtual machines, and the hypervisor may be configured to perform load balancing in the case in which the use ratio of the dedicated processor core of each of the plurality of virtual machines is overloaded and terminate load balancing in the case in which the overload is resolved. Accordingly, load balancing in the signal processing device may be efficiently performed.

The signal processing device may further comprise a plurality of processor cores, wherein the hypervisor may be configured to determine the idle time of each of the processor cores of the plurality of virtual machines and allocate a required number of dedicated processor cores and shared processor cores to the plurality of virtual machines based on the idle time. Accordingly, the plurality of processor cores in the signal processing device may be efficiently utilized.

The hypervisor may be configured to control use of the shared processor cores to be turned off in order of decreasing use ratio of the dedicated processor cores of each of the plurality of virtual machines. Accordingly, the plurality of processor cores in the signal processing device may be efficiently utilized.

The first virtual machine, among the plurality of virtual machines, may comprise a resource monitor configured to monitor resource usage information, and the hypervisor in the processor may comprise a load balancing manager configured to control load balancing for the processor cores of the plurality of virtual machines and a resource provider configured to execute allocation or reallocation of resources of the plurality of virtual machines.

A display apparatus for vehicles according to another embodiment of the present disclosure comprises a first display and a second display disposed in a vehicle and a signal processing device including a processor configured to perform signal processing for the first display and the second display, wherein the signal processing device comprises a processor configured to perform signal processing for a display mounted in a vehicle, the processor is configured to execute a plurality of virtual machines on a hypervisor in the processor, and the hypervisor in the processor is configured to monitor resource usage information of the plurality of virtual machines and execute allocation or reallocation of resources of the plurality of virtual machines. Accordingly, the resource usage information of the plurality of virtual machines may be monitored and efficiently utilized in the hypervisor.

The signal processing device may be configured to display a second image on the second display while a first image is displayed on the first display based on resource monitoring and load balancing. Accordingly, the second image may be stably displayed on the second display without interruption while the first image is being displayed on the first display.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to the present disclosure;
FIG. 6 is a view showing another example of the system driven in the signal processing device according to the present disclosure;
FIG. 7 is a view showing another example of the system driven in the signal processing device according to the present disclosure;
FIGs. 8 to 9B are views referred to in the description of FIG. 5;
FIG. 10 is a view showing a further example of the system driven in the signal processing device according to the present disclosure;
FIGs. 11A and 11B show various examples of a system driven in a signal processing device related to the present disclosure;
FIG. 12 illustrates an example of a system driven in a signal processing device according to an embodiment of the present disclosure;
FIG. 13 illustrates another example of the system driven in the signal processing device according to the embodiment of the present disclosure;
FIG. 14 illustrates a further example of the system driven in the signal processing device according to the embodiment of the present disclosure; and
FIGs. 15 to 17B are views referred to in the description of the operation of FIG. 12 or 13.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

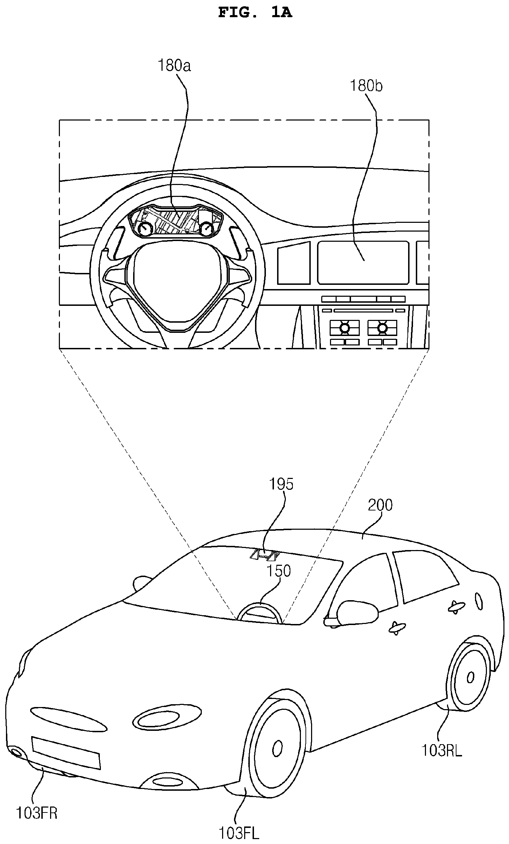

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

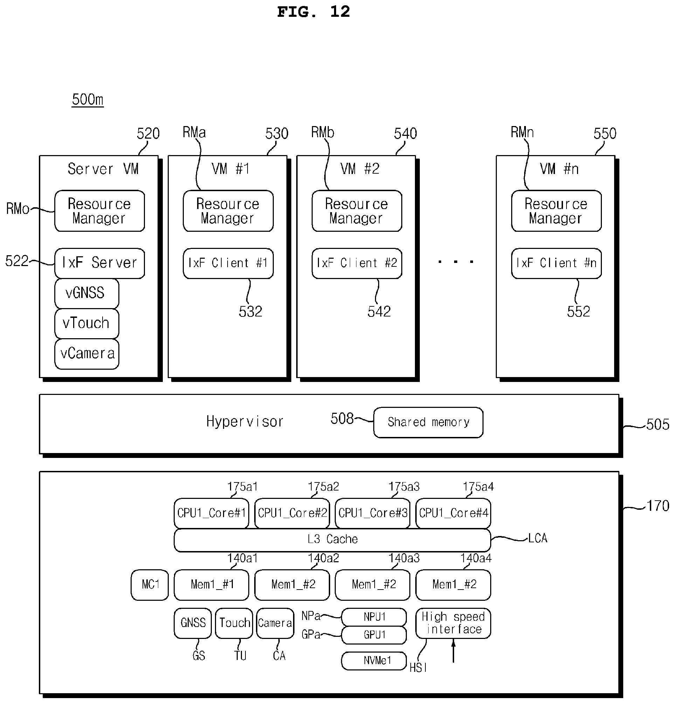

The embodiment of the present disclosure proposes a scheme for a display apparatus 100 for vehicles including a plurality of displays 180a and 180b to monitor and efficiently utilize resource usage information. This will be described with reference to FIG. 12 and subsequent figures.

Meanwhile, the vehicle 200 described in this specification may be a concept including all of a vehicle having an engine as a power source, a hybrid vehicle having an engine and an electric motor as a power source, and an electric vehicle having an electric motor as a power source.

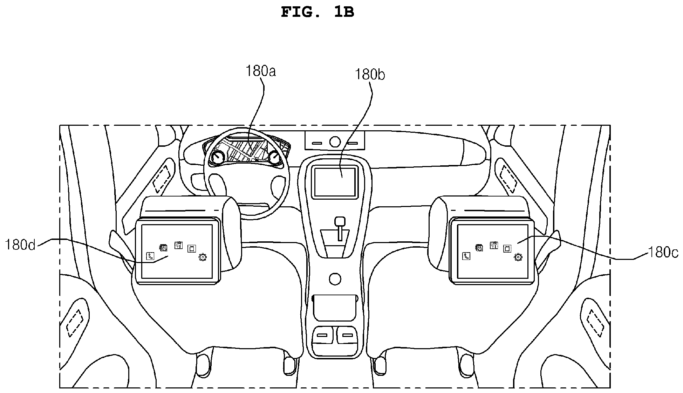

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

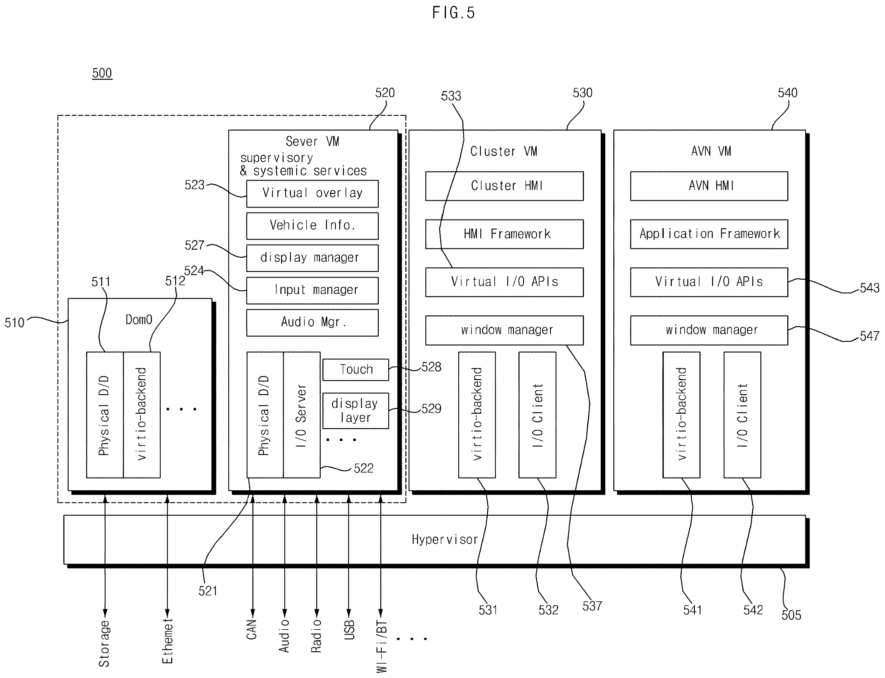

The embodiment of the present disclosure proposes a scheme for a display apparatus 100 for vehicles including a plurality of displays 180a to 180d to monitor and efficiently utilize resource usage information of a plurality of virtual machines in a hypervisor. This will be described with reference to FIG. 5 and subsequent figures.

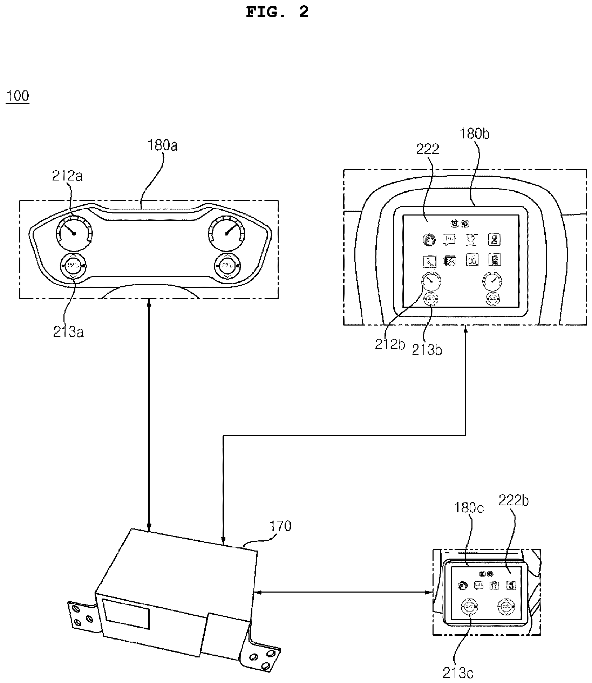

FIG. 2 is a view showing the external appearance of a display apparatus for vehicles according to an embodiment of the present disclosure.

The display apparatus 100 for vehicles according to the embodiment of the present disclosure may comprise a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicles according to the embodiment of the present disclosure may further comprise a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

In the case in which touch is input to any one of the displays 180a and 180b or 180a to 180c configured to be operated under various operating systems, the signal processing device 170 according to the embodiment of the present disclosure may be configured to process the touch input rapidly and accurately.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c.

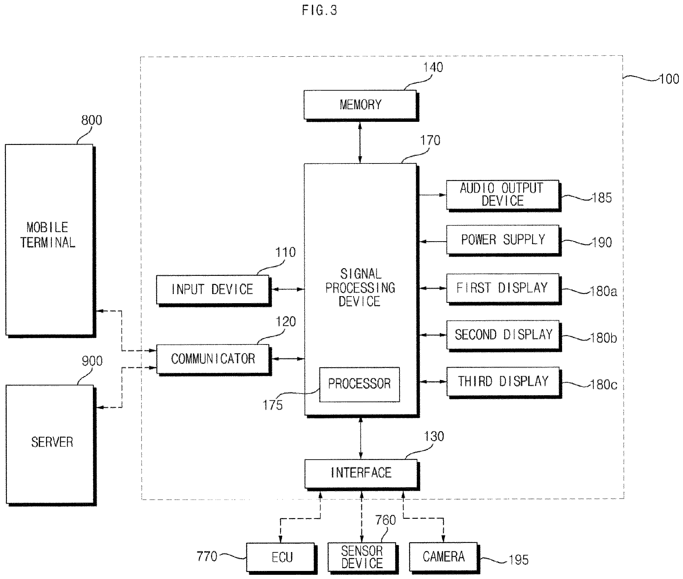

FIG. 3 illustrates an example of an internal block diagram of the display apparatus for vehicles according to the embodiment of the present disclosure.

Referring to the figure, the display apparatus 100 for vehicles according to the embodiment of the present disclosure may comprise an input device 110, a communicator 120, an interface 130, a memory 140, a signal processing device 170, a plurality of displays 180a to 180c, an audio output device 185, and a power supply 190.

The input device 110 may comprise a physical button or pad for button input or touch input.

Meanwhile, the input device 110 may comprise a touch sensor (not shown) configured to sense touch input to the displays 180a, 180b, and 180c.

Meanwhile, the input device 110 may comprise a microphone (not shown) for user voice input.

The communicator 120 may wirelessly exchange data with a mobile terminal 800 or a server 900.

In particular, the communicator 120 may wirelessly exchange data with a mobile terminal of a vehicle driver. Any of various data communication schemes, such as Bluetooth, Wi-Fi, Wi-Fi Direct, and APIX, may be used as a wireless data communication scheme.

The communicator 120 may receive weather information and road traffic situation information, such as transport protocol expert group (TPEG) information, from the mobile terminal 800 or the server 900. To this end, the communicator 120 may comprise a mobile communication module (not shown).

The interface 130 may receive sensor information from an electronic control unit (ECU) 770 or a sensor device 760, and may transmit the received information to the signal processing device 170.

Here, the sensor information may comprise at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may comprise a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may comprise a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicles.

For example, the signal processing device 170 may comprise a processor 175 configured to perform signal processing for the displays 180a and 180b.

The processor 175 may execute the first to third virtual machines 520 to 540 on the hypervisor 505 (see FIG. 5) in the processor 175.

Meanwhile, the processor 175 may further execute a legacy virtual machine configured to receive and process Ethernet data. For example, as shown in FIG. 5, the legacy virtual machine 510 may be executed by the first virtual machine 520 in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 may be configured to process the received data, and write the processed data in a second shared memory (not shown). Consequently, it is possible to monitor and efficiently utilize the resource usage information of the plurality of virtual machines in the hypervisor.

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 or the third virtual machine 540 for distributed processing of data.

For example, the first virtual machine 520 may allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

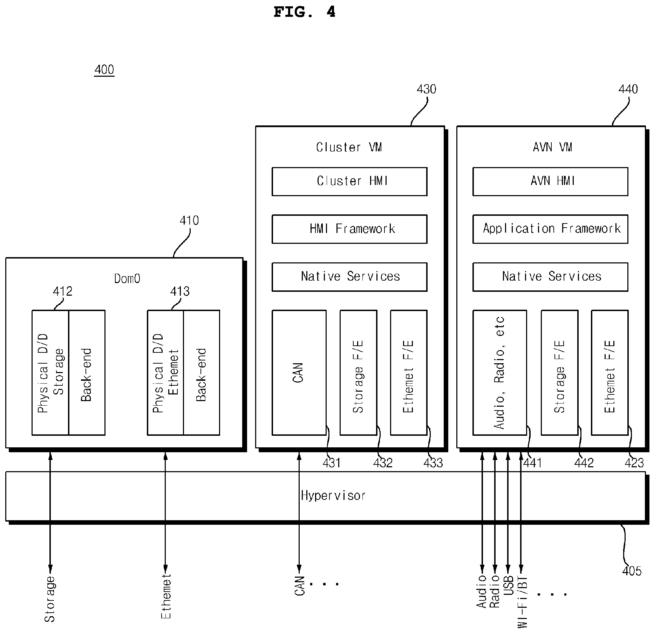

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may comprise an interface 412 for data communication with the memory 140 and an interface 413 for Ethernet communication.

Meanwhile, the cluster virtual machine 430 may comprise an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may comprise an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must comprise the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system driven in a signal processing device according to the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may comprise an interface 511 for data communication with the memory 140 and Ethernet communication.

The figure illustrates that the interface 511 is a physical device driver; however, various modifications are possible.

Meanwhile, the legacy virtual machine 510 may further comprise a virtio-backend interface 512 for data communication with the second and third virtual machines 530 and 540.

The first virtual machine 520 may comprise an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtual technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may comprise an input and output client interface 532 for data communication with the first virtual machine 520 and APIs 533 configured to control the input and output client interface 532.

In addition, the second virtual machine 530 may comprise a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may comprise an input and output client interface 542 for data communication with the first virtual machine 520 and APIs 543 configured to control the input and output client interface 542.

In addition, the third virtual machine 540 may comprise a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may comprise a display manager 527 configured to control overlays displayed on the first display 180a and the second display 180b through the second and third virtual machines 530 and 540, a display layer server 529, and a virtual overlay generator 523 configured to generate a virtual overlay.

The display layer server 529 may receive a first overlay provided by the second virtual machine 530 and a second overlay provided by the third virtual machine 540.

Meanwhile, the display layer server 529 may transmit a virtual overlay generated by the virtual overlay generator 523 to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display the first overlay and the virtual overlay on the first display 180a.

In addition, the third virtual machine 540 may be configured to combine and display the second overlay and the virtual overlay on the second display 180b.

Meanwhile, the first virtual machine 520 may comprise an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may comprise a touch server 528 configured to transmit information regarding the touch input related to the touch input from the first display 180a or the second display 180b to the second virtual machine 530 or the third virtual machine 540.

For example, in response to touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

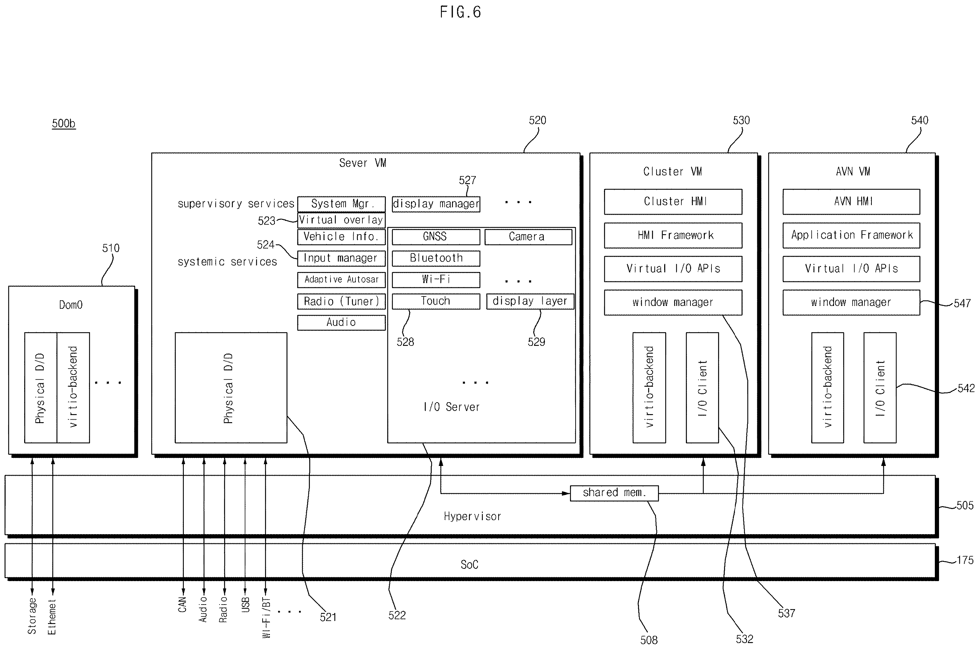

FIG. 6 is a view showing another example of the system driven in the signal processing device according to the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set he shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may comprise a display manager 527, a display layer server 529, a virtual overlay generator 523, an input manager 524, and a touch server 528, similarly to the first virtual machine 520 in the system 500 of FIG. 5.

Meanwhile, the input and output server interface 522 in the first virtual machine 520 in the system 500b of FIG. 6 may comprise a display layer server 529 and a touch server 528, unlike FIG. 5.

The operation of the display manager 527, the display layer server 529, the input manager 524, the virtual overlay generator 523, and the touch server 528 is the same to FIG. 5, and therefore a description thereof will be omitted.

Meanwhile, the first virtual machine 520 of FIG. 6 may further comprise a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further comprise a GNSS server for GPS information input and output, a Bluetooth server for Bluetooth input and output, a Wi-Fi server for Wi-Fi input and output, and a camera server for camera data input and output.

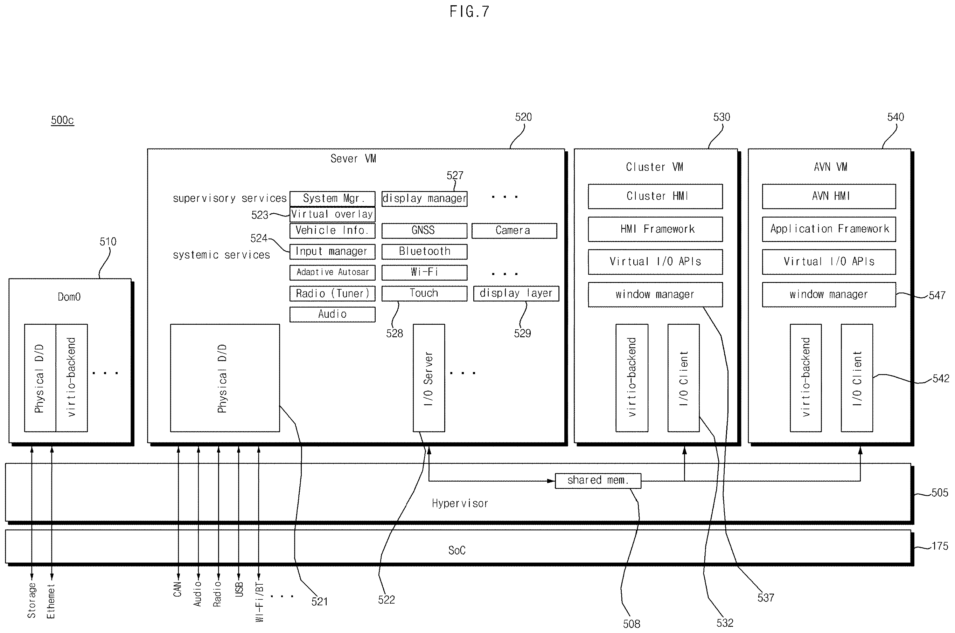

FIG. 7 is a view showing a further example of the system driven in the signal processing device according to the present disclosure.

Referring to the figure, the system 500c driven by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the virtual overlay generator 523, the input manager 524, and the touch server 528 may be provided and executed in the first virtual machine 520.

The operation of the display manager 527, the display layer server 529, the virtual overlay generator 523, the input manager 524, and the touch server 528 is the same to FIG. 5, and therefore a description thereof will be omitted.

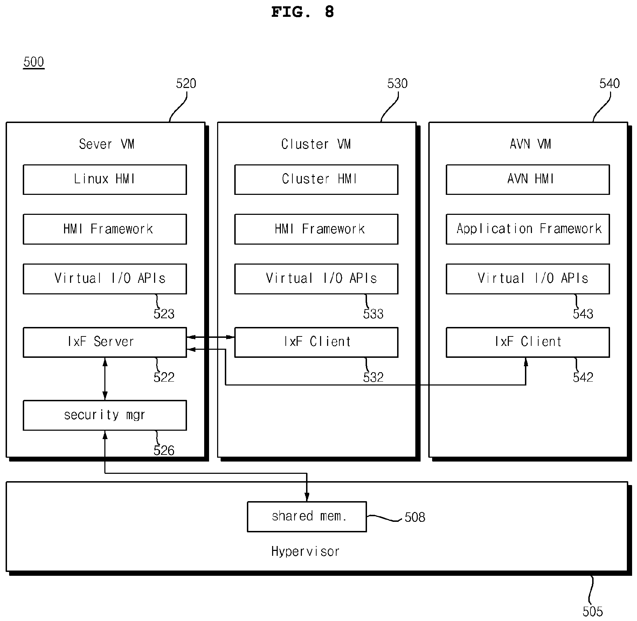

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set he shared memory 508 based on the hypervisor 505 in order to transmit the same data to the second virtual machine 530 and the third virtual machine 540.

Consequently, the plurality of displays 180a and 180b in the vehicle may display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may comprise an input and output server interface 522 and a security manager 526.

Meanwhile, the second virtual machine 530 and the third virtual machine 540 may comprise input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon.

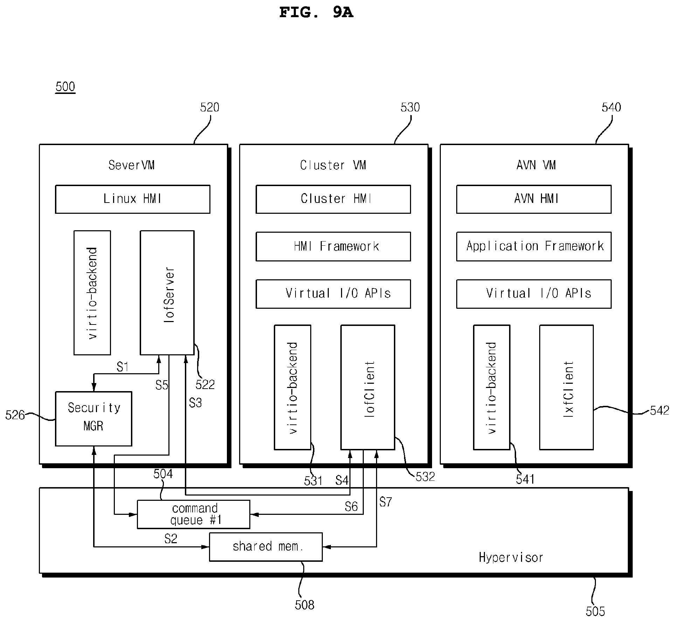

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data may be private key data for data access.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, in response to the input and output client interfaces 532 and 542 receiving the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

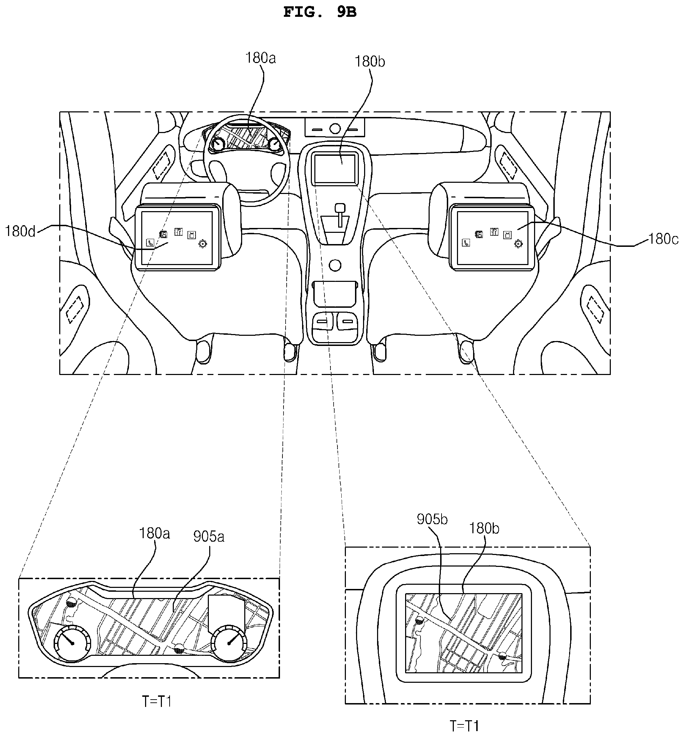

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may display the same images in a synchronized state.

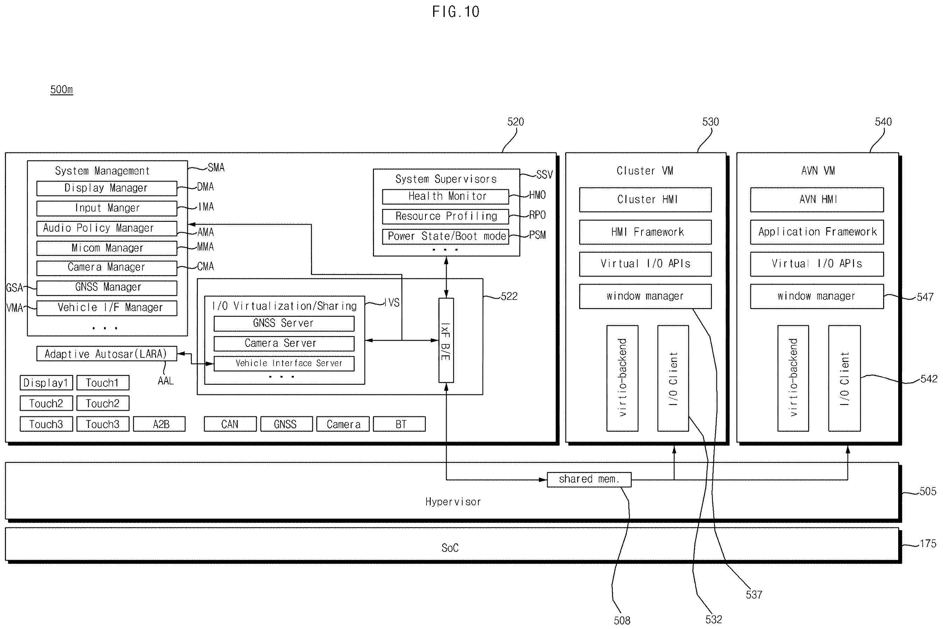

FIG. 10 is a view showing a further example of the system driven in the signal processing device according to the present disclosure.

Referring to the figure, the system 500m driven in the signal processing device 170 according to the embodiment of the present disclosure executes first to third virtual machines 520 to 540 on a hypervisor 505 in a processor 175.

Meanwhile, the second virtual machine 530 is operated for the first display 180a, and the third virtual machine 540 is operated for the second display 180b.

Meanwhile, the first virtual machine 520 in the processor 175 may execute a camera manager CMA configured to transmit camera data to the second virtual machine 530 or the third virtual machine 540, a position information manager GSA configured to transmit position information data to the second virtual machine 530 or the third virtual machine 540, and an input manager IMA configured to transmit touch input data to the second virtual machine 530 or the third virtual machine 540. Consequently, various kinds of external data may be efficiently shared.

Meanwhile, the first virtual machine 520 in the processor 175 may further execute a sensor manager VMA configured to transmit sensor data to the second virtual machine 530 or the third virtual machine 540 and an audio manager AMA configured to transmit audio data to the second virtual machine 530 or the third virtual machine 540. Accordingly, various kinds of external data may be efficiently shared.

For example, the first virtual machine 520 in the processor 175 may receive camera data from an external camera device, and the first virtual machine 520 may execute the camera manager CMA and may transmit the camera data to the second virtual machine 530 or the third virtual machine 540 using the shared memory 508.

As another example, the first virtual machine 520 in the processor 175 may receive position information data from an external GPS device, and the first virtual machine 520 may execute the position information manager GSA and may transmit the position information data to the second virtual machine 530 or the third virtual machine 540 using the shared memory 508.

As another example, the first virtual machine 520 in the processor 175 may receive touch input data, and the first virtual machine 520 may execute the input manager IMA and may transmit the touch input data to the second virtual machine 530 or the third virtual machine 540 using the shared memory 508.

As another example, the first virtual machine 520 in the processor 175 may receive sensor data from an external sensor device or microcomputer, and the first virtual machine 520 may execute the sensor manager VMA and may transmit the sensor data to the second virtual machine 530 or the third virtual machine 540 using the shared memory 508.

As a further example, the first virtual machine 520 in the processor 175 may receive audio data from an external network or an external audio device, and the first virtual machine 520 may execute the audio manager AMA and may transmit the audio data to the second virtual machine 530 or the third virtual machine 540 using the shared memory 508.

Meanwhile, the first virtual machine 520 in the processor 175 may further execute a display manager DMA configured to control an overlay displayed on the first display 180a or the second display 180b. At this time, the display manager DMA may correspond to the display manager 527 of FIG. 5.

Meanwhile, the first virtual machine 520 in the processor 175 may further execute a microcomputer manager MMA configured to control a microcomputer in the vehicle.

Meanwhile, as illustrated in the figure, the camera manager CMA, the position information manager GSA, the input manger IMA, the sensor manager VMA, the audio manager AMA, the display manager DMA, and the microcomputer manager MMA may be controlled by a system manager SMA.

That is, the first virtual machine 520 in the processor 175 may execute the system manager SMA, and the system manager SMA may selectively execute the camera manager CMA, the position information manager GSA, the input manger IMA, the sensor manager VMA, the audio manager AMA, the display manager DMA, or the microcomputer manager MMA.

Meanwhile, the first virtual machine 520 in the processor 175 may execute a system supervisor.

The system supervisor may execute a health monitor HMO for body information monitoring, a resource profile RPO for resource profiling, and power management PSM for a power state or a boot mode.

Meanwhile, the first virtual machine 520 in the processor 175 may execute AUTOSAR.

Meanwhile, the first virtual machine 520 in the processor 175 may execute an input and output server interface 522 for sharing of data with the second virtual machine 530 or the third virtual machine 540.

The figure illustrates that input and output virtual IVS and an interface backend IFE are executed or provided in the input and output server interface 522. Unlike this, however, only the interface backend IFE may be executed or provided in the input and output server interface 522.

The interface backend IFE in the input and output server interface 522 may write data from the system manager SMA in a shared memory 508 based on the hypervisor 505.

The second virtual machine 530 or the third virtual machine 540 may read the data written in the shared memory 508. Consequently, the second virtual machine 530 or the third virtual machine 540, which is a guest virtual machine, may efficiently share data received from the outside.

Meanwhile, the first virtual machine 520 in the processor 175 may be configured to set up the shared memory 508 based on the hypervisor 505 for each of the camera manager CMA, the position information manager GSA, and the input manager IMA. Accordingly, data for each manager may be shared using each shared memory.

For example, the first virtual machine 520 in the processor 175 may be configured to store the camera data from the camera manager CMA in the first shared memory, to store the position information from the position information manager GSA in the second shared memory, and to store the input data or the touch input data from the input manager IMA in the third shared memory. Accordingly, data for each manager may be shared using each shared memory.

In addition to the camera manager CMA, the position information manager GSA, and the input manager IMA, the first virtual machine 520 in the processor 175 may be configured to set up the shared memory 508 based on the hypervisor 505 for each of the sensor manager VMA, the audio manager AMA, the display manager DMA, and the microcomputer manager MMA. Accordingly, data for each manager may be shared using each shared memory.

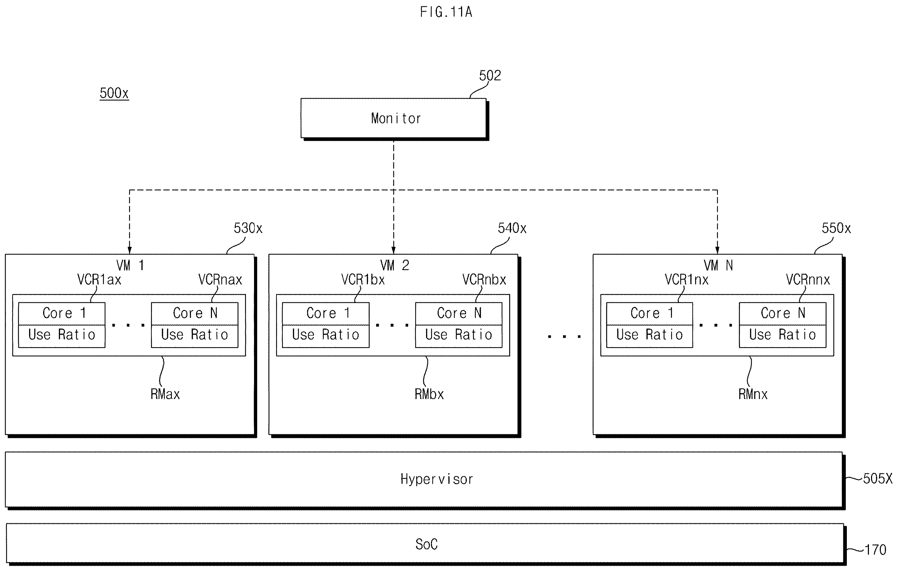

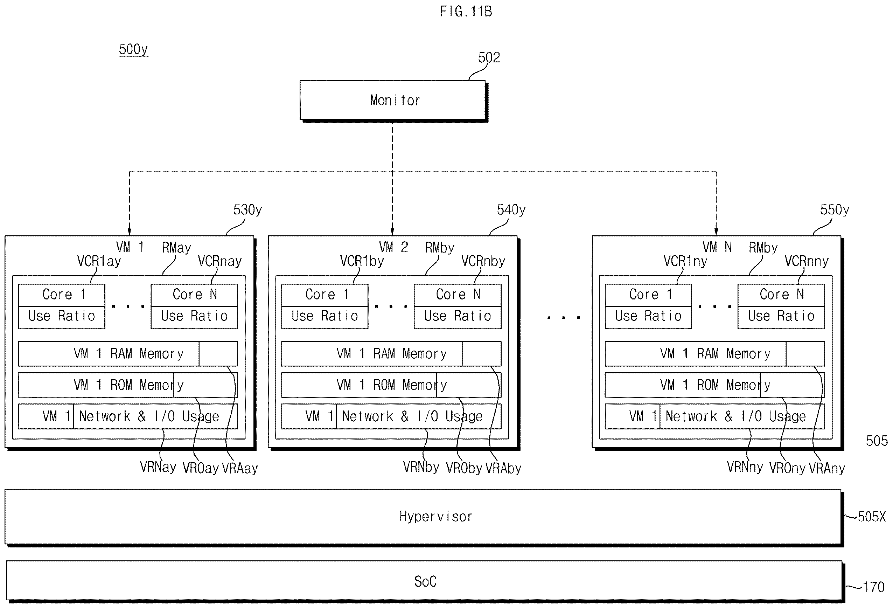

FIGs. 11A and 11B show various examples of a system driven in a signal processing device related to the present disclosure.

FIG. 11A shows an example of a system driven in a signal processing device related to the present disclosure.

Referring to the figure, the system 500x driven in the signal processing device related to the present disclosure may execute a hypervisor 505x in the signal processing device 170, and execute a plurality of virtual machines 530x, 540x, and 550x on the hypervisor 505x.

Meanwhile, the virtual machines 530x, 540x, and 550x may execute resource managers RMax, RMbx, and RMnx that monitor the use ratio of processor cores in the signal processing device 170, respectively.

Meanwhile, in the system 500x of FIG. 11A, in order to comprehensively monitor the resource utilization of each of the virtual machines 530x, 540x, and 550x, a separate monitor 502 is required, as shown.

However, the monitor 502 operates independently of the plurality of virtual machines 530x, 540x, and 550x, and monitors the resource utilization of each of the virtual machines 530x, 540x, and 550x outside the plurality of virtual machines 530x, 540x, and 550x, particularly outside the hypervisor 505x, whereby it is difficult to determine which of the virtual machines 530x, 540x, and 550x is resource starved and which of the virtual machines 530x, 540x, and 550x is resource free. Thus, it is difficult to control dynamic allocation and load balancing of resources.

FIG. 11B shows another example of the system driven in the signal processing device related to the present disclosure.

Referring to the figure, the system 500y driven in the signal processing device related to the present disclosure may execute a hypervisor 505y in the signal processing device 170, and execute a plurality of virtual machines 530y, 540y, and 550y on the hypervisor 505y.

Meanwhile, the virtual machines 530y, 540y, and 550y may execute resource managers RMay, RMby, and RMny that monitor the use ratio of the processor cores in the signal processing device 170, respectively.

Meanwhile, each of the resource managers RMay, RMby, and RMny of FIG. 11B, may be configured to monitor the use ratio of non-volatile memory, the use ratio of volatile memory, the use ratio of a network, or the use ratio of an input/output interface in addition to the use ratio of the processor cores, unlike the resource managers RMax, RMbx, and RMnx of FIG. 11A.

Meanwhile, in the system 500y of FIG. 11B, in order to comprehensively monitor the resource utilization of each of the virtual machines 530Y, 540Y, and 550Y, a separate monitor 502 is required, as shown.

However, the monitor 502 operates independently of the plurality of virtual machines 530y, 540y, and 550y, and monitors the resource utilization of each of the virtual machines 530y, 540y, and 550y outside the plurality of virtual machines 530y, 540y, and 550y, particularly outside the hypervisor 505y, whereby it is difficult to determine which of the virtual machines 530y, 540y, and 550y is resource starved and which of the virtual machines 530y, 540y, and 550y is resource free. Thus, it is difficult to control dynamic allocation and load balancing of resources.

Accordingly, the present disclosure proposes a scheme to monitor and efficiently utilize resource usage information of the plurality of virtual machines in the hypervisor. In particular, the present disclosure proposes a scheme to dynamically allocate or reallocate resources and to perform load balancing. This will be described with reference to FIG. 12 and subsequent figures.

FIG. 12 illustrates showing an example of a system driven in a signal processing device according to an embodiment of the present disclosure.

Referring to the figure, in the system 500m driven in the signal processing device 170 according to the embodiment of the present disclosure, a first virtual machine 520, which is a server virtual machine, a second virtual machine 530, which is a first guest virtual machine, a third virtual machine 540, which is a second guest virtual machine, and a fourth virtual machine 550, which is a third guest virtual machine, are executed on a hypervisor 505 in a processor 175 in the signal processing device 170.

The second virtual machine 530 may be a virtual machine for a cluster display 180a, the third virtual machine 540 may be a virtual machine for an AVN display 180b, and the fourth virtual machine 550 may be a virtual machine for an RSE display 180c.

Meanwhile, the first virtual machine 520, which is a server virtual machine, may have an interface 521 for input and output of audio data, radio data, USB data, and wireless communication data and an input/output server interface 522 for data communication with the guest virtual machines.

Meanwhile, the second virtual machine 530, the third virtual machine 540, and the fourth virtual machine 550, which are guest virtual machines, may have input/output client interfaces 532, 542, and 552 for data communication with the first virtual machine 520, which is a server virtual machine, respectively.

Meanwhile, the signal processing device 170 may comprise a plurality of processor cores 175a1 to 175a4, a cache LCA, a plurality of memories 140a1 to 140a4, a position information driver GS for receiving or processing position information data, a touch driver TU for receiving or processing touch input data, and a camera driver CA for receiving or processing camera image data.

Meanwhile, some of the plurality of memories 140A1 to 140A4 may be non-volatile memories, and the others may be volatile memories.

Meanwhile, the signal processing device 170 may further comprise a neural network processor NPa for a neural network processing process, a graphics processor GPa for a graphics processing process, and a high-speed interface HSI for high-speed data transmission. The high-speed interface HSI may support PCIe, CCIX, or CXL.

Meanwhile, the virtual machines 520 to 550 may execute resource managers RMo, RMa, RMb, and RMn for managing resources related to the virtual machines, respectively.

Each of the resource managers RMo, RMa, RMb, and RMn may be configured to monitor at least one of the use ratio of the processor cores 175a1 to 175a4, the use ratio of the cache LCA, the use ratio of the non-volatile memory, the use ratio of the volatile memory, the use ratio of the network, or the use ratio of the input/output interface HSI.

Meanwhile, the hypervisor 505 in the processor 175 according to the embodiment of the present disclosure may be configured to monitor the resource usage information of the plurality of virtual machines 520 to 550 and execute allocation or reallocation of resources of the plurality of virtual machines 520 to 550. Accordingly, the resource usage information of the plurality of virtual machines 520 to 550 may be monitored and efficiently utilized in the hypervisor 505.

Meanwhile, the resource usage information of the virtual machines 520 to 550 monitored by the hypervisor 505 in the processor 175 may be transmitted to the resource managers RMo, RMa, RMb, and RMn, respectively.

Meanwhile, the hypervisor 505 in the processor 175 may be configured to monitor the resource usage information of the plurality of virtual machines 520 to 550 and execute allocation or reallocation of resources of the plurality of virtual machines 520 to 550 based on a resource management request of the first virtual machine 520, among the plurality of virtual machines 520 to 550. Accordingly, the resource usage information of the plurality of virtual machines 520 to 550 may be monitored and efficiently utilized in the hypervisor 505.

Meanwhile, the hypervisor 505 in the processor 175 may be configured to monitor resource usage information of the guest virtual machines 530, 540, and 550, among the plurality of virtual machines 520 to 550, and execute reallocation or resetting of resources of the plurality of virtual machines 520 to 550 based on a resource management request of the first virtual machine 520, among the plurality of virtual machines 520 to 550. Accordingly, the resource usage information of the plurality of virtual machines 520 to 550 in the hypervisor 505 may be monitored and efficiently utilized.

Meanwhile, the hypervisor 505 in the processor 175 may be configured to monitor the resource usage information of the second virtual machine 530 and the third virtual machine 540 and execute reallocation or resetting of resources of the plurality of virtual machines 520 to 550 based on a resource management request of the first virtual machine 520 in the case in which the first display 180a and the second display 180b are operated. Accordingly, the resource usage information of the plurality of virtual machines 520 to 550 may be monitored and efficiently utilized in the hypervisor 505.

Meanwhile, the resource usage information of each virtual machine collected by the hypervisor 505 may be transmitted to the first virtual machine 520, among the plurality of virtual machines 520 to 550. Accordingly, the first virtual machine 520 may collect the resource usage information.

Meanwhile, the resource usage information may comprise at least one of the use ratio of the processor cores in the signal processing device 170, the use ratio of the non-volatile memory, the use ratio of the volatile memory, the use ratio of the network, and the use ratio of the input/output interface. Accordingly, the processor cores, the non-volatile memory, the volatile memory, the network, or the input/output interface in the signal processing device 170 may be efficiently utilized.

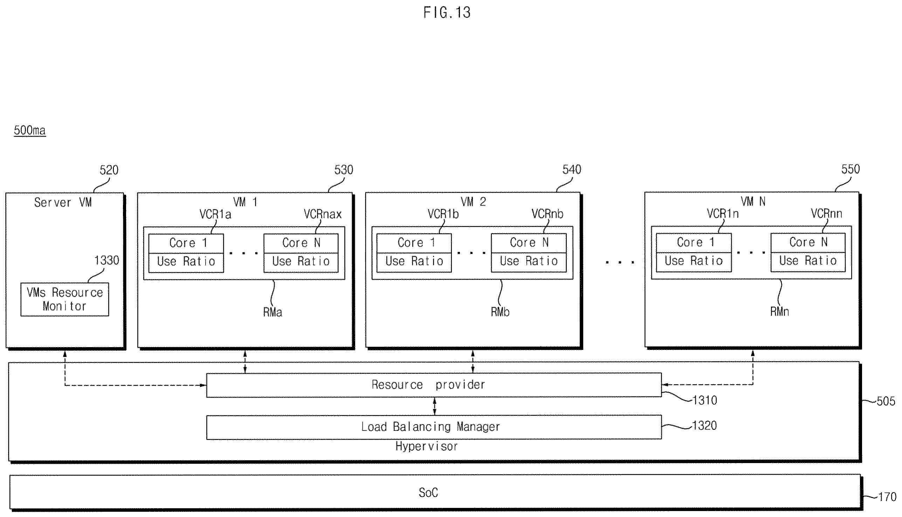

FIG. 13 illustrates another example of the system driven in the signal processing device according to the embodiment of the present disclosure.

Referring to the figure, in the system 500ma driven in the signal processing device 170 according to the embodiment of the present disclosure, a first virtual machine 520, which is a server virtual machine, a second virtual machine 530, which is a first guest virtual machine, a third virtual machine 540, which is a second guest virtual machine, and a fourth virtual machine 550, which is a third guest virtual machine, are executed on a hypervisor 505 in a processor 175 in the signal processing device 170, similarly to the system 500m of FIG. 12.

The system 500ma driven in the signal processing device 170 of FIG. 13 is different from the system of FIG. 12 in that a resource provider 1310 and a load balancing manager 1320 are provided in the hypervisor 505. Accordingly, a description of the same operation as in FIG. 12 will be omitted, and the description will focus on the differences.

As illustrated in the figure, resource managers RMa to RMc in the plurality of guest virtual machines 530 to 550 execute pluralities of virtual processor cores VCR1a to VCRna, VCR1b to VCRnb, and VCR1n to VCRnn, whereby the use ratio of the plurality of processor cores is monitored and managed.

Meanwhile, the hypervisor 505 in the processor 175 may comprise a load balancing manager 1320 that controls load balancing for the processor cores of the plurality of virtual machines 520 to 550, and a resource provider 1310 that executes allocation or reallocation of resources of the plurality of virtual machines 520 to 550.

For example, the resource provider 1310 may be configured to monitor the resource usage information of the plurality of virtual machines 520 to 550 and execute allocation or reallocation of resources of the plurality of virtual machines 520 to 550.

Specifically, the resource provider 1310 may be configured to monitor the resource usage information of the plurality of virtual machines 520 to 550 and execute allocation or reallocation of resources of the plurality of virtual machines 520 to 550 based on a resource management request of the first virtual machine 520, among the plurality of virtual machines 520 to 550.

Meanwhile, the resource provider 1310 may be configured to monitor the resource usage information of the guest virtual machines, among the plurality of virtual machines 520 to 550, and execute reallocation or resetting of resources of the plurality of virtual machines 520 to 550 based on a resource management request of the first virtual machine 520, among the plurality of virtual machines 520 to 550.

Meanwhile, the resource provider 1310 may be configured to monitor the resource usage information of the second virtual machine 530 and the third virtual machine 540 and execute reallocation or resetting of resources of the plurality of virtual machines 520 to 550 based on a resource management request of the first virtual machine 520.

Meanwhile, the resource provider 1310 may be configured to transmit the collected resource usage information of each virtual machine to the first virtual machine 520, among the plurality of virtual machines 520 to 550.

Meanwhile, the resource usage information may comprise the use ratio of processor cores in the signal processing device 170.

Meanwhile, the load balancing manager 1320 may be configured to control only the fourth virtual machine 550 in which the use ratio of the dedicated processor core is overloaded, among the plurality of virtual machines 520 to 550, to use the shared processor core. Accordingly, the plurality of processor cores 175a1 to 175a4 in the signal processing device 170 may be efficiently utilized.

Meanwhile, the load balancing manager 1320 may be configured to convert some of the dedicated processor cores to shared processor cores or convert some of the shared processor cores to dedicated processor cores based on the use ratio of the dedicated processor cores or the shared processor cores. Accordingly, the plurality of processor cores 175a1 to 175a4 in the signal processing device 170 may be efficiently utilized.

Meanwhile, the load balancing manager 1320 may be configured to perform load balancing in the case in which the use ratio of the dedicated processor core of each of the plurality of virtual machines 520 to 550 is overloaded, and terminate load balancing in the case in which the overload is resolved. Accordingly, the plurality of processor cores 175a1 to 175a4 in the signal processing device 170 may be efficiently utilized.

Meanwhile, the load balancing manager 1320 may be configured to determine the idle time of each of the processor cores of the plurality of virtual machines 520 to 550 and allocate a required number of dedicated and shared processor cores to the plurality of virtual machines 520 to 550 based on the idle time. Accordingly, the plurality of processor cores 175a1 to 175a4 in the signal processing device 170 may be efficiently utilized.

Meanwhile, the load balancing manager 1320 may be configured to control use of the shared processor cores to be turned off in order of decreasing use ratio of the dedicated processor cores of each of the plurality of virtual machines 520 to 550. Accordingly, the plurality of processor cores 175A1 to 175A4 in the signal processing device 170 may be efficiently utilized.

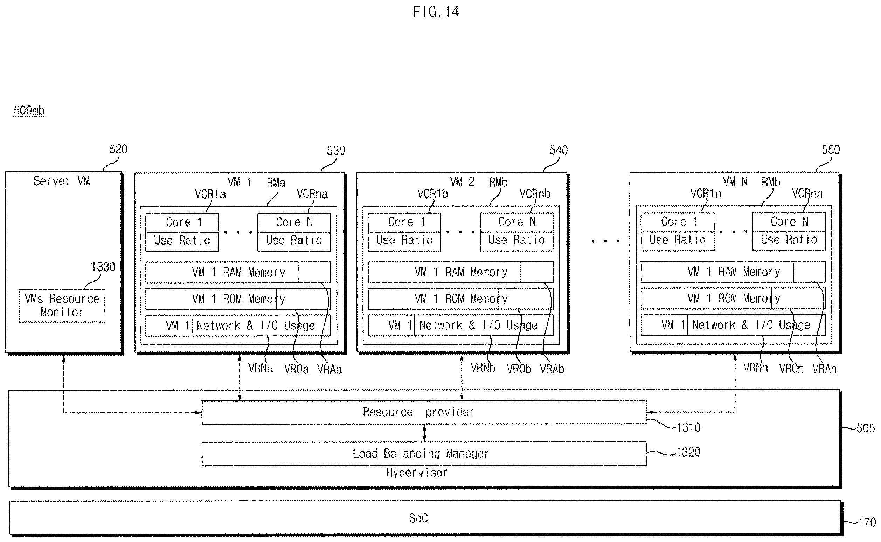

FIG. 14 illustrates a further example of the system driven in the signal processing device according to the embodiment of the present disclosure.

Referring to the figure, in the system 500mb driven in the signal processing device 170 according to the embodiment of the present disclosure, a first virtual machine 520, which is a server virtual machine, a second virtual machine 530, which is a first guest virtual machine, a third virtual machine 540, which is a second guest virtual machine, and a fourth virtual machine 550, which is a third guest virtual machine, are executed on a hypervisor 505 in a processor 175 in the signal processing device 170, similarly to the system 500ma of FIG. 13.

Meanwhile, the system 500mb driven in the signal processing device 170 of FIG. 14 comprises a resource provider 1310 and a load balancing manager 1320 provided in the hypervisor 505, similarly to FIG. 13.

As illustrated in the figure, resource managers RMa to RMc in the plurality of guest virtual machines 530 to 550 execute pluralities of virtual processor cores VCR1a to VCRna, VCR1b to VCRnb, and VCR1n to VCRnn, virtual volatile memories VRAa to VRAn, and virtual non-volatile memories VROa to VROn, virtual networks, and input/output interfaces VRNa to VRNn, and further monitor or manage the use ratio of the non-volatile memory, the use ratio of the volatile memory, the use ratio of the network, or the use ratio of the input/output interface in addition to the use ratio of the plurality of processor cores.

Meanwhile, the hypervisor 505 in the system 500ma driven in the signal processing device 170 of FIG. 13 executes allocation or reallocation of resources or load balancing based on the use ratio of the plurality of processor cores, whereas the hypervisor 505 in the system 500mb driven in the signal processing device 170 of FIG. 14 executes allocation or reallocation of resources or load balancing based on at least one of the use ratio of the non-volatile memory, the use ratio of the volatile memory, the use ratio of the network, and the use ratio of the input/output interface in addition to the use ratio of the plurality of processor cores. Accordingly, a description of the same operation as in FIG. 13 will be omitted, and the description will focus on the differences.

Meanwhile, the hypervisor 505 in the processor 175 may comprise a load balancing manager 1320 that controls load balancing for processor cores of the plurality of virtual machines 520 to 550 and a resource provider 1310 that executes allocation or reallocation of resources of the plurality of virtual machines 520 to 550.

Meanwhile, the resource provider 1310 may be configured to monitor resource usage information of the second virtual machine 530 and the third virtual machine 540 and execute reallocation or resetting of resources of the plurality of virtual machines 520 to 550 based on a resource management request of the first virtual machine 520.

Meanwhile, the resource usage information may comprise at least one of the use ratio of the processor cores in the signal processing device 170, the use ratio of the non-volatile memory, the use ratio of the volatile memory, the use ratio of the network, and the use ratio of the input/output interface.

For example, the resource provider 1310 may be configured to monitor at least one of the use ratio of the processor cores, the use ratio of the non-volatile memory, the use ratio of the volatile memory, the use ratio of the network, and the use ratio of the input/output interface, and execute resource reallocation or resetting related to the processor core of each of the plurality of virtual machines 520 to 550, the non-volatile memory, the volatile memory, the network, or the input/output interface.

Meanwhile, the load balancing manager 1320 may be configured to control only the virtual machine in which the use ratio of the non-volatile memory is overloaded, among the plurality of virtual machines 520 to 550, to use the non-volatile memory. Accordingly, the non-volatile memory in the signal processing device 170 may be efficiently utilized.

Meanwhile, the load balancing manager 1320 may be configured to control only the virtual machine in which the use ratio of the volatile memory is overloaded, among the plurality of virtual machines 520 to 550, to use the volatile memory. Accordingly, the volatile memory in the signal processing device 170 may be efficiently utilized.

Meanwhile, the load balancing manager 1320 may be configured to control only the virtual machine in which the use ratio of the network is overloaded, among the plurality of virtual machines 520 to 550, to use the network. Accordingly, the network in the signal processing device 170 may be efficiently utilized.

Meanwhile, the load balancing manager 1320 may be configured to control only the virtual machine in which the use ratio of the input/output interface is overloaded, among the plurality of virtual machines 520 to 550, to use the input/output interface. Accordingly, the input/output interface in the signal processing device 170 may be efficiently utilized.

Meanwhile, the load balancing manager 1320 may be configured to perform load balancing in the case in which at least one of the use ratio of the plurality of processor cores of the plurality of virtual machines 520 to 550, the use ratio of the volatile memory, the use ratio of the network, and the use ratio of the input/output interface is overloaded, and terminate load balancing in the case in which the overload is resolved. Accordingly, at least one of the plurality of processor cores, the volatile memory, the network, and the input/output interface in the signal processing device 170 may be efficiently utilized.

Meanwhile, the load balancing manager 1320 may be configured to determine the idle time of at least one of at least one of the use ratio of the plurality of processor cores of the plurality of virtual machines 520 to 550, the use ratio of the volatile memory, the use ratio of the network, and the use ratio of the input/output interface, and may be configured to at least one of a required number of processor cores, the volatile memory, the network, and the input/output interface is allocated to the plurality of virtual machines 520 to 550 based on the idle time. Accordingly, at least one of the plurality of processor cores, the volatile memory, the network, and the input/output interface in the signal processing device 170 may be efficiently utilized.

Meanwhile, the load balancing manager 1320 may control that at least one of the plurality of processor cores, the volatile memory, the network, and the input/output interface of each of the plurality of virtual machines 520 to 550 is turned off in order of decreasing use ratio of at least one of the plurality of processor cores, the volatile memory, the network, and the input/output interface. Accordingly, at least one of the plurality of processor cores, the volatile memory, the network, and the input/output interface in the signal processing device 170 may be efficiently utilized.

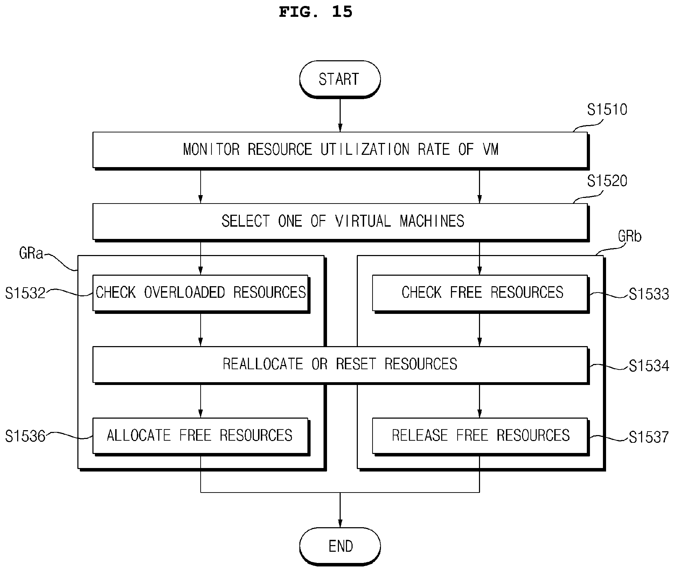

FIGs. 15 to 17B are views referred to in the description of the operation of FIG. 12 or 13.

FIG. 15 is a view showing a method of operating the signal processing device according to the embodiment of the present disclosure.

Referring to the figure, the hypervisor 505 in the signal processing device 170 monitors resource usage information of the plurality of virtual machines 520 to 550 (S1510).

The resource usage information may comprise at least one of the use ratio of the processor core, the use ratio of the non-volatile memory, the use ratio of the volatile memory, utilization of the network, and the use ratio of the input/output interface in the signal processing device 170.

Subsequently, the hypervisor 505 in the signal processing device 170 selects a virtual machine that is operated among the plurality of virtual machines 520 to 550 (S1520).

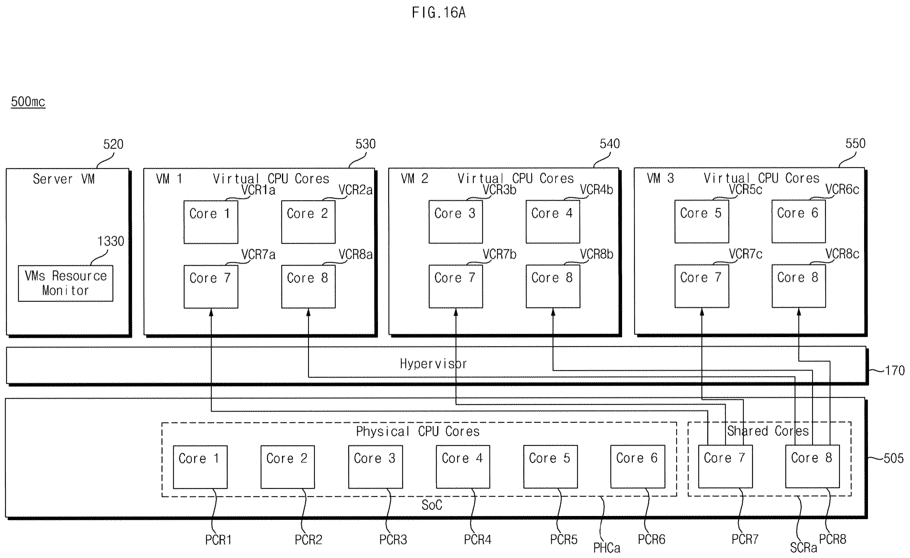

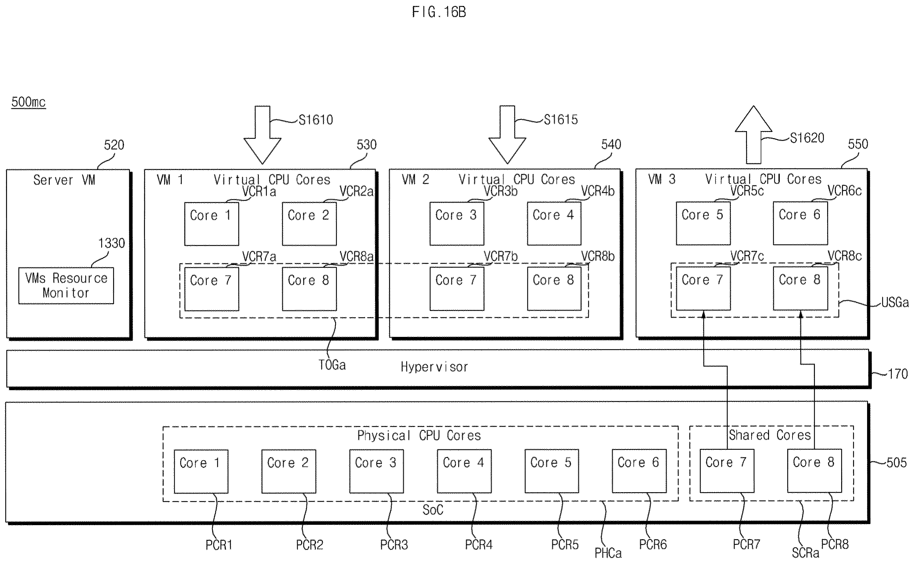

For example, in a system 500mc of FIG. 16A or 16B, in the case in which a second virtual machine 530, which is a first guest virtual machine, is free and a fourth virtual machine 550, which is a third guest virtual machine, is overloaded, the hypervisor 505 in the signal processing device 170 may select the second virtual machine 530 as a free virtual machine and may select the fourth virtual machine 550 as an overloaded virtual machine.

Subsequently, the hypervisor 505 in the signal processing device 170 checks overloaded resources of the overloaded virtual machine (S1532) and checks free resources of the free virtual machine (S1533).

Subsequently, the hypervisor 505 in the signal processing device 170 may reallocate or reset resources for the overloaded virtual machine and the free virtual machine (S1534).

Subsequently, the hypervisor 505 in the signal processing device 170 may allocate reallocated resources to the overloaded virtual machine (S1536) and is configured to control free resources are released from the free virtual machine (S1537).

For example, the hypervisor 505 in the signal processing device 170 may be configured to reallocate resources such that only the fourth virtual machine 550, which is an overloaded virtual machine, to use the shared processor core, and release resources such that the second virtual machine 520, which is a free virtual machine, not to use the shared processor core. Accordingly, resource usage information of the plurality of virtual machines 520 to 550 in the hypervisor 505 may be monitored and efficiently utilized.

FIGs. 16A to 16C are views referred to in the description of the operation of FIG. 15.

First, FIG. 16A illustrates a system 500mc driven in the signal processing device 170 according to the embodiment of the present disclosure.

Referring to the figure, the processor 175 in the signal processing device 170 according to the embodiment of the present disclosure may execute a first virtual machine 520, which is a server virtual machine, a second virtual machine 530, which is a first guest virtual machine, a third virtual machine 540, which is a second guest virtual machine, and a fourth virtual machine 550, which is a third guest virtual machine, on the hypervisor 505.

Meanwhile, the system 500mc driven in the signal processing device 170 of FIG. 16A may comprise a resource provider 1310 and a load balancing manager 1320 in the hypervisor 505, similarly to FIG. 13.

Meanwhile, the plurality of guest virtual machines 530 to 550 in the system 500mc driven in the signal processing device 170 of FIG. 16A may execute resource managers RMa to RMc, respectively, similarly to FIG. 13.

Meanwhile, the first virtual machine 520 in the system 500mc driven in the signal processing device 170 of FIG. 16A may comprise a resource monitor 1330 that monitors resource usage information of the first virtual machine 520 and the plurality of guest virtual machines 530 to 550.

Meanwhile, the second virtual machine 530, which is a first guest virtual machine, may execute or use a plurality of virtual dedicated processor cores VCR1a and VCR2a and a plurality of virtual shared processor cores VCR7a and VCR8a.

Meanwhile, the third virtual machine 540, which is a second guest virtual machine, may execute or use a plurality of virtual dedicated processor cores VCR3a and VCR4a and a plurality of virtual shared processor cores VCR7a and VCR8a.

Meanwhile, the fourth virtual machine 550, which is a third guest virtual machine, may execute or use a plurality of virtual dedicated processor cores VCR5a and VCR6a and a plurality of virtual shared processor cores VCR7a and VCR8a.

Meanwhile, the signal processing device 170 of FIG. 16A comprises a plurality of processor cores PCR1 to PCR8.

Meanwhile, the signal processing device 170 of FIG. 16A may further comprise a plurality of memories 140a1 to 140a4, a neural network processor NPa, a graphics processor GPa for graphics processing, and a high-speed interface HSI for high-speed data transmission in addition to the plurality of processor cores PCR1 to PCR8.

Meanwhile, the plurality of processor cores PCR1 to PCR8 may be divided into shared processor cores PCR7 and PCR8 that are shared by the plurality of virtual machines 520 to 550 and dedicated processor cores PCR1 to PCR6 for each of the plurality of virtual machines 520 to 550.

Meanwhile, the hypervisor 505 may be configured to control the virtual machine in which the use ratio of the dedicated processor cores PCR1 to PCR6 is not overloaded, among the plurality of virtual machines 520 to 550, not to use the shared processor cores PCR7 and PCR8. Accordingly, the plurality of processor cores PCR1 to PCR8 in the signal processing device 170 may be efficiently utilized.

Meanwhile, the hypervisor 505 may be configured to control the virtual machine in which the use ratio of the dedicated processor cores PCR1 to PCR6 is overloaded, among the plurality of virtual machines 520 to 550, exclusively uses the shared processor cores PCR7 to PCR8 or the use ratio of the shared processor cores PCR7 to PCR8 is increased in the state in which some of the plurality of virtual machines 520 to 550 not to use the shared processor cores PCR7 and PCR8. Accordingly, the plurality of processor cores PCR1 to PCR8 in the signal processing device 170 may be efficiently utilized.

Meanwhile, the hypervisor 505 may be configured to perform load balancing in the case in which the use ratio of the dedicated processor cores PCR1 to PCR6 of each of the plurality of virtual machines 520 to 550 is overloaded and terminate load balancing in the case in which the overload is resolved. Accordingly, load balancing in the signal processing device 170 may be efficiently performed.

FIG. 16B illustrates that, among the plurality of guest virtual machines 530 to 550, the use ratio of the dedicated processor cores PCR1 to PCR4 of the second virtual machine 530, which is a first guest virtual machine, and the third virtual machine 540, which is a second guest virtual machine, is not overloaded and free and the use ratio of the dedicated processor cores PCR5 to PCR6 of the fourth virtual machine 550, which is a third guest virtual machine, is overloaded.

Accordingly, the hypervisor 505 may be configured to control the second virtual machine 530 and the third virtual machine 540 in which the use ratio of the dedicated processor cores PCR1 to PCR4 is not overloaded, among the plurality of virtual machines 520 to 550, not to use the shared processor cores PCR7 and PCR8. Accordingly, the plurality of processor cores PCR1 to PCR8 in the signal processing device 170 may be efficiently utilized.

Meanwhile, the hypervisor 505 may be configured to control only the fourth virtual machine 550 in which the use ratio of the dedicated processor cores PCR1 to PCR6 is overloaded, among the plurality of virtual machines 520 to 550, to use the shared processor cores PCR7 and PCR8. Accordingly, the plurality of processor cores PCR1 to PCR8 in the signal processing device 170 may be efficiently utilized.

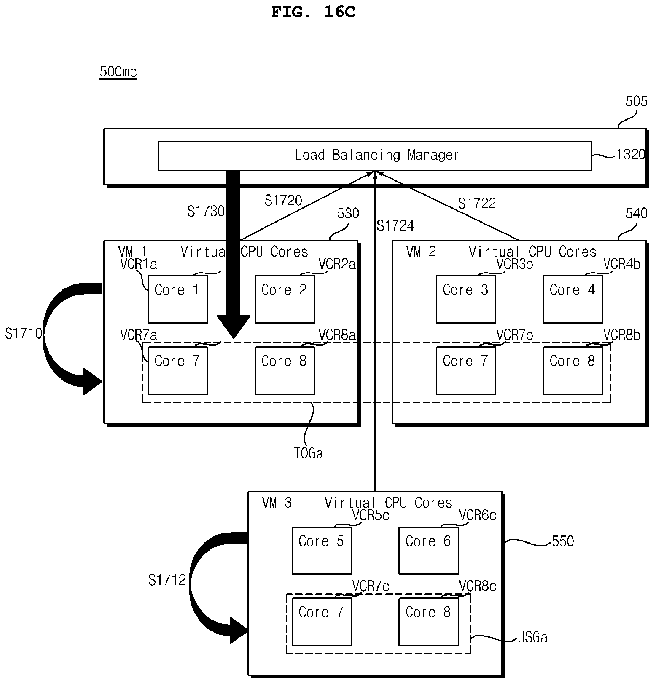

FIG. 16C illustrates that, among the guest virtual machines 530 to 550, the second guest virtual machine 530, which is a first guest virtual machine, and the third guest virtual machine 540, which is a second guest virtual machine, are free virtual machine and the fourth virtual machine 550 is an overloaded virtual machine.

Referring to the figure, the second virtual machine 530, which is a first guest virtual machine, may be configured to execute or use a plurality of virtual dedicated processor cores VCR1a and VCR2a and a plurality of virtual shared processor cores VCR7a and VCR8a, the third virtual machine 540, which is a second guest virtual machine, may execute or use a plurality of virtual dedicated processor cores VCR3a and VCR4a and the plurality of virtual shared processor cores VCR7a and VCR8a, and the fourth virtual machine 550, which is a third guest virtual machine, may execute or use a plurality of virtual dedicated processor cores VCR5a and VCR6a and the plurality of virtual shared processor cores VCR7a and VCR8a.

Meanwhile, the load balancing manager 1320 in the hypervisor 505 may be configured to determine the idle time of the processor cores of the plurality of virtual machines 520 to 550 (S1710) and may be configured to allocate a required number of dedicated processor cores PCR1 to PCR6 and shared processor cores PCR7 to PCR8 to the plurality of virtual machines 520 to 550 based on the idle time.

For example, the hypervisor 505 may be configured to control, for some virtual machines, the shared processor cores PCR7 and PCR8 to be turned off.

Specifically, the hypervisor 505 may be configured to control the shared processor cores PCR7 and PCR8 to be turned off for the second virtual machine 530 and the third virtual machine. Accordingly, the plurality of processor cores PCR1 to PCR8 in the signal processing device 170 may be efficiently utilized.

Meanwhile, the hypervisor 505 may be configured to control the shared processor cores PCR7 and PCR8 to be turned off in order of decreasing use ratio of the dedicated processor cores PCR1 to PCR6 of each of the plurality of virtual machines 520 to 550 (S1730). Accordingly, the plurality of processor cores PCR1 to PCR8 in the signal processing device 170 may be utilized efficiently.

Meanwhile, the hypervisor 505 may be configured to convert some of the dedicated processor cores PCR1 to PCR6 to shared processor cores PCR7 to PCR8 or convert some of the shared processor cores PCR7 to PCR8 to dedicated processor cores PCR1 to PCR6 based on the use ratio of the dedicated processor cores PCR1 to PCR6 or the shared processor cores PCR7 to PCR8.

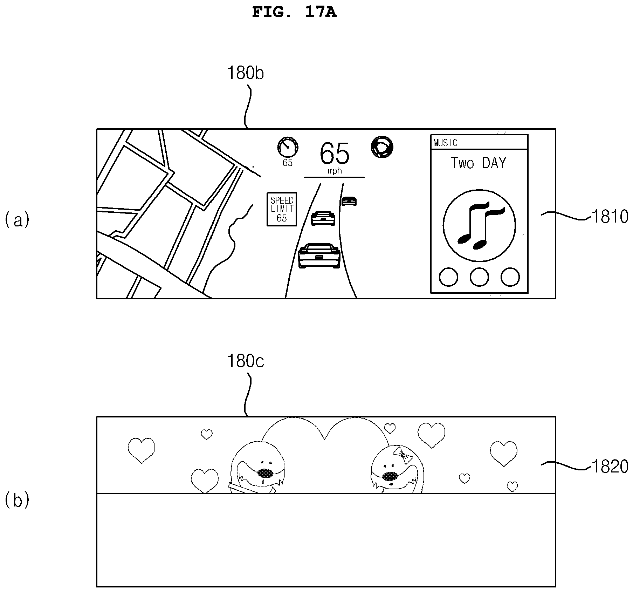

] FIG. 17A illustrates that an image is displayed on each of the second display 180B and the third display 180C in the vehicle 200 in the case in which dynamic allocation and load balancing control of resources is difficult, as shown in FIGs. 11A and 11B.

For example, in the case in which a navigation map image 1810 is displayed on the second display 180b and a content image or a game image 1820 is simultaneously displayed on the third display 180c, dynamic allocation and load balancing control of resources may be difficult, as shown in FIGs. 11A to 11B.

As illustrated in the figure, the game image 1820 in which the use ratio of the plurality of processor cores is overloaded is not smoothly processed, whereby the image is partially delayed or cut off in the middle.

Meanwhile, according to the embodiment of the present disclosure, as shown in FIGs. 12 to 16C, dynamic allocation and load balancing control of resources is possible.

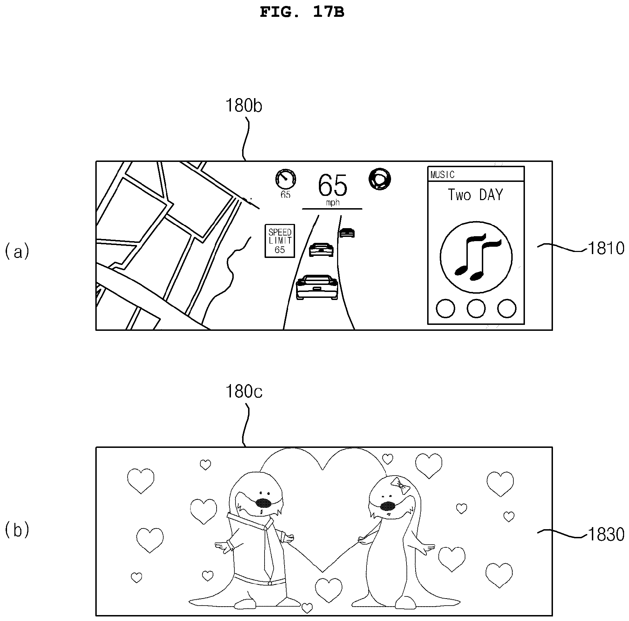

FIG. 17B illustrates that an image is displayed on each of the second display 180B and the third display 180C in the vehicle 200 in the case in which dynamic allocation and load balancing control of resources is difficult, according to the embodiment of the present disclosure.

Referring to the figure, in the case in which a navigation map image 1810 is displayed on the second display 180b and a content image or a game image 1830 is simultaneously displayed on the third display 180c, dynamic allocation and load balancing control of resources is possible.

As illustrated in the figure, the game image 1830 in which the use ratio of the plurality of processor cores is overloaded is smoothly processed, whereby the image is not delayed or is displayed as a full image without being cut off in the middle.

As a result, the signal processing device 170 may stably display the first image 1810 and the second image 1830 on the second display 180b and the third display 180c in the vehicle 200 based on resource monitoring and load balancing.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display mounted in a vehicle,
wherein the processor is configured to execute a plurality of virtual machines on a hypervisor in the processor, and
wherein the hypervisor in the processor is configured to monitor resource usage information of the plurality of virtual machines and execute allocation or reallocation of resources of the plurality of virtual machines.

2. The signal processing device of claim 1, wherein the hypervisor in the processor is configured to monitor the resource usage information of the plurality of virtual machines and execute allocation or reallocation of the resources of the plurality of virtual machines based on a resource management request of a first virtual machine, among the plurality of virtual machines.

3. The signal processing device of claim 1, wherein the hypervisor in the processor is configured to monitor resource usage information of a guest virtual machine, among the plurality of virtual machines, and execute reallocation or resetting of the resources of the plurality of virtual machines based on a resource management request of a first virtual machine, among the plurality of virtual machines.

4. The signal processing device of claim 1, wherein
among the plurality of virtual machines, a second virtual machine, is operated for a first display and a third virtual machine is operated for a second display, and
the hypervisor in the processor is configured to monitor resource usage information of the second virtual machine and the third virtual machine and execute reallocation or resetting of the resources of the plurality of virtual machines based on a resource management request of a first virtual machine.

5. The signal processing device of claim 1, wherein the resource usage information of each virtual machine collected by the hypervisor is transmitted to a first virtual machine, among the plurality of virtual machines.

6. The signal processing device of claim 5, wherein the resource usage information comprises at least one of a use ratio of a processor core in the signal processing device, a use ratio of a non-volatile memory, a use ratio of a volatile memory, a use ratio of a network, and a use ratio of an input/output interface.

7. The signal processing device of claim 1, further comprising a plurality of processor cores, wherein
the plurality of processor cores is divided into a shared processor core shared by the plurality of virtual machines and a dedicated processor core for each of the plurality of virtual machines, and
the hypervisor is configured to control a virtual machine in which a use ratio of the dedicated processor core is not overloaded, among the plurality of virtual machines, not to use the shared processor core.

8. The signal processing device of claim 1, further comprising:
a plurality of processor cores, wherein
the plurality of processor cores is divided into a shared processor core shared by the plurality of virtual machines and a dedicated processor core for each of the plurality of virtual machines, and
the hypervisor is configured to control a virtual machine in which a use ratio of the dedicated processor core is overloaded, among the plurality of virtual machines, to exclusively use the shared processor core or increase a use ratio of the shared processor core in a state in which some of the plurality of virtual machines do not use the shared processor core.

9. The signal processing device of claim 1, further comprising:
a plurality of processor cores, wherein
the plurality of processor cores is divided into a shared processor core shared by the plurality of virtual machines and a dedicated processor core for each of the plurality of virtual machines, and
the hypervisor is configured to control a second virtual machine and a third virtual machine in which a use ratio of the dedicated processor core is not overloaded, among the plurality of virtual machines, not to use the shared processor core.

10. The signal processing device of claim 9, wherein the hypervisor is configured to control only a fourth virtual machine in which the use ratio of the dedicated processor core is overloaded, among the plurality of virtual machines, to use the shared processor core.

11. The signal processing device of claim 1, further comprising:
a plurality of processor cores, wherein
the plurality of processor cores is divided into shared processor cores shared by the plurality of virtual machines and dedicated processor cores for each of the plurality of virtual machines, and
the hypervisor is configured to convert some of the dedicated processor cores to shared processor cores or convert some of the shared processor cores to dedicated processor cores based on a use ratio of the dedicated processor cores or the shared processor cores.

12. The signal processing device of claim 1, further comprising:
a plurality of processor cores, wherein
the plurality of processor cores is divided into a shared processor core shared by the plurality of virtual machines and a dedicated processor core for each of the plurality of virtual machines, and
the hypervisor is configured to perform load balancing in the case in which a use ratio of the dedicated processor core of each of the plurality of virtual machines is overloaded and terminate the load balancing in the case in which the overload is resolved.

13. The signal processing device of claim 1, further comprising:
a plurality of processor cores, wherein
the hypervisor is configured to determine an idle time of each of the processor cores of the plurality of virtual machines and allocate a required number of dedicated processor cores and shared processor cores to the plurality of virtual machines based on the idle time.

14. The signal processing device of claim 13, wherein the hypervisor is configured to control use of the shared processor cores to be turned off in order of decreasing use ratio of the dedicated processor cores of each of the plurality of virtual machines.

15. The signal processing device of claim 1, wherein
a first virtual machine, among the plurality of virtual machines, comprises a resource monitor configured to monitor resource usage information, and
the hypervisor in the processor comprises:
a load balancing manager configured to control load balancing for the processor cores of the plurality of virtual machines; and
a resource provider configured to execute allocation or reallocation of resources of the plurality of virtual machines.

16. The signal processing device of claim 1, wherein a first virtual machine in the processor is configured to execute a camera manager to control transmission of camera data, a position information manager to control transmission of position information data, and an input manager to control transmission of touch input data.

17. The signal processing device of claim 16, wherein the first virtual machine in the processor is configured to set up a shared memory based on the hypervisor for each of the camera manager, the position information manager, and the input manager.

18. A display apparatus for vehicles, the display apparatus comprising:
a first display and a second display disposed in a vehicle; and
a signal processing device comprising a processor configured to perform signal processing for the first display and the second display, wherein
the signal processing device comprises the signal processing device of any one of claims 1 to 17.

19. The display apparatus of claim 18, wherein the signal processing device is configured to display a second image on the second display while a first image is displayed on the first display based on resource monitoring and load balancing.
